# FASCICULE DE BREVET EUROPEEN

(11) **EP 3 165 074 B1**
(45) Date de publication et mention de la délivrance du brevet: **18.04.2018**
(21) Numéro de dépôt: 16305212.9
(22) Date de dépôt: 24.02.2016
(51) Int. Cl.: A01D 33/02

(54) **DISPOSITIF D'EFFEUILLAGE DE LÉGUMES À TUBERCULE POUR UNE MACHINE DE RÉCOLTE DE TELS LÉGUMES**
VORRICHTUNG ZUR BLATTENTFERNUNG VON KNOLLENGEMÜSE FÜR EINE ERNTEMASCHINE DIESES GEMÜSES
DEVICE FOR REMOVING THE LEAVES OF TUBERS FOR A MACHINE FOR HARVESTING SUCH VEGETABLES

(30) Priorité: 06.11.2015 FR 1560651
(43) Date de publication de la demande: 10.05.2017
(73) Titulaire: Claire Fontaine S.A. Par Abreviation C.F.S.A., 44450 La Chapelle-Basse-Mer (FR)
(72) Inventeur: QUERU, Arnaud, 44470 CARQUEFOU (FR)
(74) Mandataire: Jacobacci Coralis Harle

(56) Documents cités:
- EP-A1- 0 299 416
- BE-A7- 1 016 345
- DE-A1- 4 240 203
- FR-A1- 2 398 442
- NL-A- 6 412 808

## Description

### DOMAINE TECHNIQUE AUQUEL SE RAPPORTE L'INVENTION

La présente invention concerne le domaine général du machinisme agricole ou maraicher.
Elle concerne plus particulièrement les machines de récolte des légumes à tubercules tels que les carottes, betteraves, navets ou similaires.
Elle concerne en particulier un dispositif d'effeuillage des légumes, ainsi qu'un barreau d'effeuillage, pour une telle machine de récolte.

### ARRIERE-PLAN TECHNOLOGIQUE

Il existe de nombreux types de machines de récolte adaptés pour effectuer de manière automatique l'arrachage hors du sol de tubercules à feuilles tels que les betteraves, les navets et plus particulièrement les carottes.

Ces machines de récolte comportent, associés sur un même châssis tracté ou automoteur : un dispositif d'arrachage, des moyens de convoyage des tubercules arrachés jusqu'à un dispositif d'effeuillage adapté à débarrasser les tubercules de leurs feuilles ou fanes, suivi de moyens de stockage des tubercules effeuillés.

On connait notamment des documents EP-0 299 416 ou FR-2 398 442 de telles machines de récolte dans lesquelles le dispositif d'effeuillage comprend deux jeux de barreaux d'effeuillage (généralement deux jeux de six barreaux) portés à chacune de leurs extrémités par des moyeux supports rotatifs, de sorte à ce que lesdits jeux de barreaux s'entrecroisent et viennent pincer les feuilles des légumes pour les désolidariser de leurs tubercules par arrachage.

Pour cela, dans ce genre de dispositif d'effeuillage (appelé de manière courante « équeuteur »), les barreaux d'effeuillage consistent en des organes allongés monoblocs dont les deux extrémités se prolongent par un arbre de roulement servant de portée de roulement ; et chaque moyeu support (dit moyeu d'équeuteur) comporte une pluralité de systèmes de roulements, répartis autour de son axe de rotation, adaptés chacun à la réception de l'un desdits arbres de roulement.

Chaque jeu de barreaux comporte deux moyeux supports rotatifs qui sont maintenus par des flasques sur le châssis de la machine de récolte et qui tournent selon des axes parallèles entre eux et non confondus.
Les arbres de roulement de chaque barreau d'effeuillage s'étendent également selon des axes parallèles et non confondus.

L'un des moyeux supports de chaque jeu de barreaux d'effeuillage est connecté à un arbre d'entraînement actionné par un moteur hydraulique via un boitier de transmission ou un système pignons/chaîne.
L'autre des deux moyeux supports est laissé libre en rotation et tourne autour de son axe de rotation sous l'effet du mouvement des barreaux.

Les barreaux d'effeuillage des deux jeux de barreaux juxtaposés sont adaptés pour s'entrecroiser lors de la rotation de leurs moyeux supports et, comme précisé ci-dessus, pour pincer les feuilles ou fanes de manière à les désolidariser de leurs tubercules.

En fonctionnement, la vitesse de rotation des moyeux supports est de quelques centaines de tours par minute, par exemple de l'ordre de 350 tours/minute.

Du fait de la rotation rapide de ces moyeux supports et de l'ambiance de travail relativement agressive (restes de terre collés aux tubercules, efforts nécessaires à l'arrachage des feuilles/fanes, fonctionnement extérieur soumis aux intempéries ...) les barreaux et les roulements des moyeux supports s'usent assez vite et il est nécessaire de les remplacer régulièrement.
De plus, de manière ponctuelle, un barreau et/ou un système de roulement peut se détériorer et même se casser, par exemple sous l'action d'un débris indésirable tel qu'une pierre ou autre.

Cependant, la structure des dispositifs d'effeuillage actuels nécessite le démontage complet des jeux de barreaux avec leurs moyeux supports, pour remplacer une pièce usée ou cassée, ce qui demande un temps de main d'oeuvre important.

### OBJET DE L'INVENTION

Afin de remédier à cet inconvénient, la présente invention propose un dispositif d'effeuillage de légumes à tubercules type carottes, betteraves, navets ou similaires, pour une machine de récolte de tels légumes, lequel dispositif d'effeuillage est du type comprenant deux jeux juxtaposés de barreaux d'effeuillage portés par des moyeux supports rotatifs, de manière adaptée pour que lesdits barreaux d'effeuillage desdits deux jeux de barreaux d'effeuillage s'entrecroisent et pincent les feuilles desdits légumes pour les désolidariser de leurs tubercules par arrachage,
les deux extrémités de chacun desdits barreaux d'effeuillage se prolongeant par un arbre de roulement, et chaque moyeu support comportant une pluralité de systèmes de roulements, chacun adapté à la réception de l'un desdits arbres de roulement ;
et conformément à la présente invention, l'un au moins desdits barreaux d'effeuillage comporte au moins une extrémité munie de moyens de fixation amovible dudit arbre de roulement.

Une telle fixation amovible de l'arbre de roulement sur l'extrémité de son barreau support permet un démontage et une maintenance simples et rapides.

Les moyens de fixation amovible correspondants comprennent avantageusement une vis de fixation.

Selon une forme de réalisation préférée, l'extrémité dudit barreau d'effeuillage muni des moyens de fixation amovible de l'arbre de roulement comprend un orifice traversant comportant une extrémité distale, à distance dudit arbre de roulement, et une extrémité proximale, à proximité dudit arbre de roulement,
lequel orifice traversant est adapté pour recevoir ladite vis de fixation constituée d'une tête de vis raccordée par un épaulement à un corps de vis muni d'un filetage ;
ladite extrémité distale dudit orifice traversant comporte un épaulement destiné à coopérer avec ledit épaulement de ladite vis de fixation, pour le blocage en translation de cette dernière ;
et ledit arbre de roulement consiste en un organe cylindrique comportant une embase de fixation, laquelle embase de fixation comporte un orifice taraudé, muni d'un filetage, agencé pour venir dans le prolongement dudit orifice traversant de l'extrémité dudit barreau d'effeuillage, pour permettre le positionnement dudit corps de vis dans ledit orifice traversant et dans ledit orifice taraudé qui le prolonge, afin d'assurer la fixation amovible dudit arbre de roulement sur ladite extrémité de barreau d'effeuillage par la coopération dudit filetage de la vis de fixation avec ledit filetage dudit orifice taraudé.

Selon un mode de réalisation préférentiel, ledit organe cylindrique dudit arbre de roulement comporte un axe longitudinal L, ledit orifice taraudé de ladite embase de fixation comporte un axe longitudinal L', et lesdits axes longitudinaux L et L' sont parallèles entre eux.

Selon une autre caractéristique de ce mode de réalisation préférentiel, l'embase de fixation dudit arbre de roulement comporte une section transversale audit axe longitudinal L' dudit orifice taraudé, dont l'encombrement est supérieur à l'encombrement de la section transversale audit axe longitudinal L dudit organe cylindrique.

De préférence encore, lesdits axes longitudinaux L et L' ne sont pas confondus.

Toujours selon un mode de réalisation préféré, l'extrémité dudit barreau d'effeuillage comporte une réservation dont la forme est complémentaire de celle d'au moins une partie de ladite embase dudit arbre de roulement, pour l'accueil de cette dernière.

Selon encore une autre particularité, ledit barreau d'effeuillage comporte une partie active centrale, rectiligne ou sensiblement rectiligne, d'axe longitudinal E, munie de deux embouts monoblocs qui se terminent par une tête d'embout constituant lesdites extrémités de barreaux d'effeuillage,
lesquels embouts s'étendent selon un axe longitudinal F incliné par rapport audit axe E, et ledit orifice traversant étant ménagé au travers de ladite tête d'embout.

De préférence encore, les deux extrémités de l'un au moins desdits barreaux d'effeuillage (et avantageusement de tous les barreaux d'effeuillage des deux jeux de barreaux) sont munies desdits moyens de fixation amovible de l'arbre de roulement associé.

L'invention concerne aussi un barreau d'effeuillage pour un dispositif d'effeuillage tel que défini ci-dessus, dont au moins l'une des extrémités est munie de moyens de fixation amovible de l'arbre de roulement associé.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue générale schématique en perspective d'une partie de machine de récolte comportant un dispositif d'effeuillage conforme à l'invention ;
- la figure 2 est une vue générale et isolée, en perspective, du dispositif d'effeuillage de la machine de récolte illustrée sur la figure 1 ;
- la figure 3 est une vue en perspective de l'un des deux jeux de barreaux d'effeuillage du dispositif d'effeuillage illustré sur la figure 2 ;
- la figure 4 est une vue en perspective de l'un des barreaux d'effeuillage des jeux de barreaux du dispositif d'effeuillage illustré sur les figures 2 et 3 ;
- la figure 5 est une vue de côté du barreau d'effeuillage illustré sur la figure 4, avec l'une de ses extrémités comportant une coupe locale ;
- la figure 6 est une vue du barreau d'effeuillage similaire à la figure 5, dans laquelle l'arbre de roulement situé au niveau de la coupe locale est désolidarisé de son embout support.

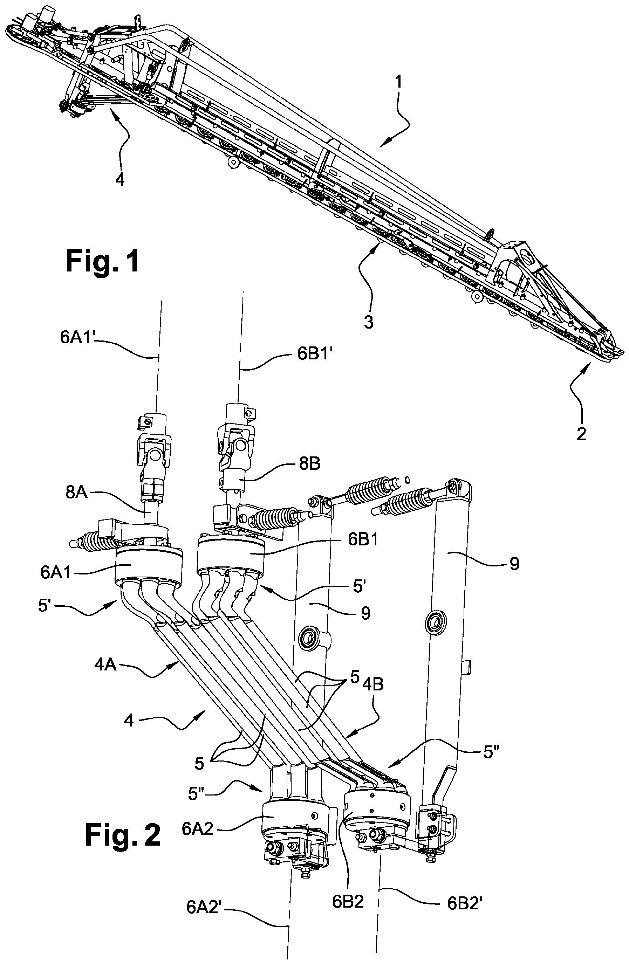

La figure 1 est une vue en perspective d'une partie « cueilleur » 1 d'une machine de récolte de légumes du type tubercules à feuilles, par exemple pour la récolte de carottes.

Cette partie cueilleur 1 est destinée à être portée par un châssis tracté ou automoteur, non représenté.
Elle comporte un dispositif d'arrachage 2, par exemple en forme de soc, associé à un dispositif convoyeur 3 qui assure la prise en charge des légumes par leurs feuilles, avec les tubercules en suspension, et qui les transporte jusqu'à un dispositif d'effeuillage 4, du type dispositif équeuteur, représenté isolément sur la figure 2.

Ce dispositif d'effeuillage 4, connu en lui-même, comprend deux jeux 4A, 4B de barreaux d'effeuillage 5, qui sont portés par des moyeux supports rotatifs 6A1, 6A2, 6B1, 6B2, cela de manière adaptée pour que lesdits barreaux d'effeuillage 5 desdits deux jeux de barreaux 4A et 4B s'entrecroisent et pincent les feuilles des légumes pour les désolidariser de leurs tubercules par arrachage.

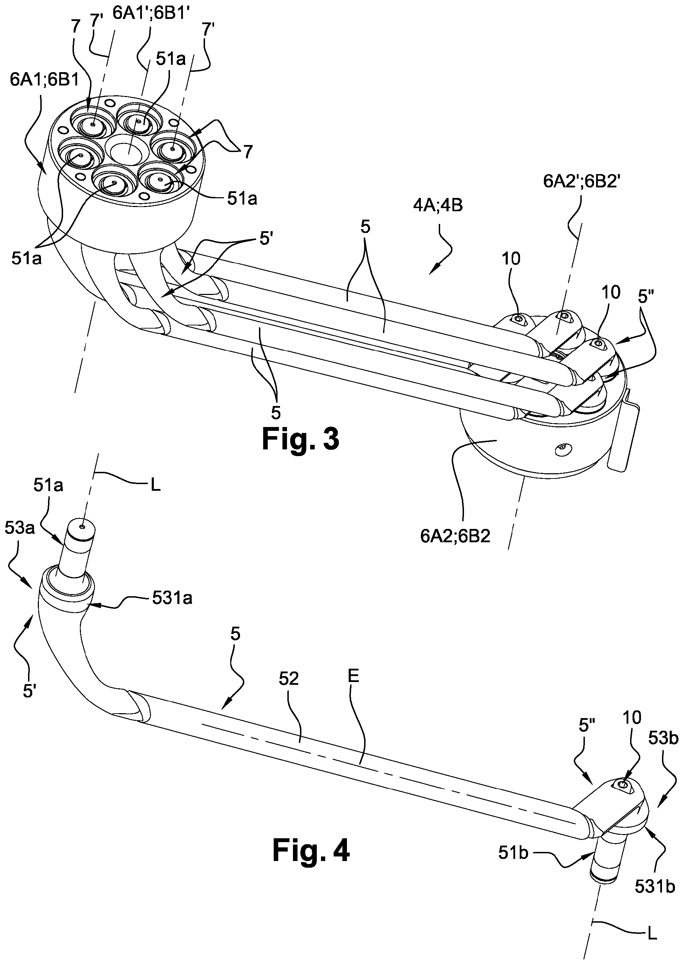

Les deux jeux des barreaux d'effeuillage 4A, 4B sont symétriques. L'un d'eux est représenté isolément sur la figure 3.

Chaque jeu de barreaux d'effeuillage 4A, 4B comporte ici six barreaux d'effeuillage 5 dont les extrémités sont portés par des systèmes de roulement 7 intégrés dans les moyeux supports rotatifs 6A1, 6A2, 6B1, 6B2.

L'un des moyeux supports 6A1, 6B1 de chaque jeu de barreaux d'effeuillage 4A, 4B (dit « moyeu support moteur ») est fixé au moyen de flasques sur le châssis de la machine de récolte, et est connecté à un arbre d'entraînement 8A, 8B. Les deux arbres d'entrainement 8A et 8B sont soumis à l'action d'une même motorisation (moteur hydraulique par exemple) par l'intermédiaire d'un boitier de transmission ou d'un système pignons/chaine (non représentés).
Ces moyeux supports moteurs 6A1, 6B1 tournent sur eux-mêmes autour d'un axe de rotation 6A1', 6B1'.
Les systèmes de roulement 7 qui raccordent l'une des extrémités 5' des barreaux d'effeuillage 5 aux moyeux supports moteurs 6A1, 6B1 sont répartis sur un cercle centré sur l'axe de rotation 6A1', 6B1'.

L'autre des moyeux supports 6A2, 6B2 (dit « moyeu soumis ») est fixé sur le châssis de la machine de récolte au moyen de palonniers sur ressorts 9 permettant d'encaisser les chocs.

Ces moyeux supports soumis 6A2, 6B2 sont laissés libres en rotation et ils tournent sur eux-mêmes autour de leur axe de rotation 6A2', 6B2' sous l'action des barreaux d'effeuillage 5 associés (eux-mêmes entrainées en mouvement par les moyeux supports moteurs 6A1, 6B1).

Les systèmes de roulement 7 qui raccordent l'une des extrémités 5" des barreaux d'effeuillage 5 à ces moyeux soumis 6A2, 6B2 sont également répartis sur un cercle centré sur l'axe de rotation 6A2', 6B2'.

Pour chaque jeu de barreaux d'effeuillage 4A et 4B, l'axe de rotation 6A1', 6B1' du moyeu support moteur 6A1, 6B1 est parallèle et non confondu avec l'axe de rotation 6A2', 6B2' du moyeu support soumis 6A2, 6B2.

Le positionnement relatif des deux jeux de barreaux d'effeuillage 4A et 4B est adapté pour réaliser l'entrecroisement des barreaux d'effeuillage 5 et obtenir le pincement recherché des feuilles de légumes.

Sur les figures 2 et 3, on peut voir les six barreaux d'effeuillage 5 qui s'étendent parallèlement ou sensiblement parallèlement entre eux, dont l'une des extrémités 5' de chacun d'eux est portée par le moyeu support moteur 6A1, 6B1, et dont l'autre extrémité 5" de chacun d'eux est portée par le moyeu support soumis 6A2, 6B2.

Pour leur support, les deux extrémités 5' et 5" de chaque barreau d'effeuillage 5 se prolongent par un arbre de roulement 51a et 51b, dont chacun est réceptionné par un système de roulement 7 ménagé dans le moyeu support rotatif moteur 6A1, 6B1, d'une part, et dans le moyeu support rotatif soumis 6A2, 6B2, d'autre part.

Les moyeux supports moteur et soumis 6A1, 6B1, 6A2, 6B2 comportent donc six systèmes de roulement 7 qui sont régulièrement répartis sur un cercle centré sur l'axe de rotation 6A1', 6B1', 6A2', 6B2', et dont l'axe 7' s'étend parallèlement auxdits axes de rotation 6A1', 6B1', 6A2', 6B2'.

Les arbres de roulement 51a et 51b des barreaux d'effeuillage 5 sont parallèles entre eux et, venant chacun coopérer avec l'un des systèmes de roulement 7, leurs axes L s'étendent également parallèlement aux axes de rotation 6A1', 6B1', 6A2', 6B2' des moyeux supports moteur et soumis 6A1, 6B1, 6A2, 6B2.

Ces arbres de roulement 51a, 51b s'engagent par simple emmanchement dans les systèmes de roulement 7 et ils sont maintenus au moyen de circlips.

Conformément à la présente invention, l'un au moins des barreaux d'effeuillage 5 comporte au moins une extrémité 5', 5" munie de moyens de fixation amovible (vis de fixation 10) de l'arbre de roulement associé 51a, 51b, permettant ainsi de désolidariser l'extrémité correspondante du barreau d'effeuillage 5 de son moyeu support 6A1, 6B1, 6A2, 6B2, sans avoir besoin de démonter celui-ci.

Et de préférence, les deux extrémités 5' et 5" de tous les barreaux d'effeuillage 5 comportent de tels moyens de fixation amovible 10 de l'arbre de roulement associé 51a, 51b, pour permettre de démonter et de remonter facilement l'ensemble des barreaux d'effeuillage 5 (afin de les remplacer en cas d'usure ou de détérioration) sans nécessiter d'intervention sur les moyeux supports 6A1, 6B1, 6A2, 6B2, et en particulier sans obligation de changement des roulements lié au démontage.

Les figures 4 à 6 détaillent la structure d'un tel barreau d'effeuillage 5.

Comme on peut le voir sur ces figures 4 à 6, chaque barreau d'effeuillage 5 comporte une partie active centrale 52, rectiligne ou sensiblement rectiligne, d'axe longitudinal E, munie de deux embouts monoblocs 53a, 53b qui se terminent par une tête d'embout 531a, 531b, et qui constituent les deux extrémités 5', 5" dudit barreau d'effeuillage 5 ;
et lesdites têtes d'embouts 531a, 531b comprennent un orifice traversant 11 pour la fixation amovible de l'arbre de roulement associé 51a, 51b au moyen de ladite vis de fixation 10.

Les embouts monoblocs 53a, 53b s'étendent selon un axe longitudinal F, incliné par rapport à l'axe longitudinal E de la partie active centrale 52, de manière adaptée pour optimiser la prise en charge des feuilles de légumes en entrée du dispositif d'effeuillage.

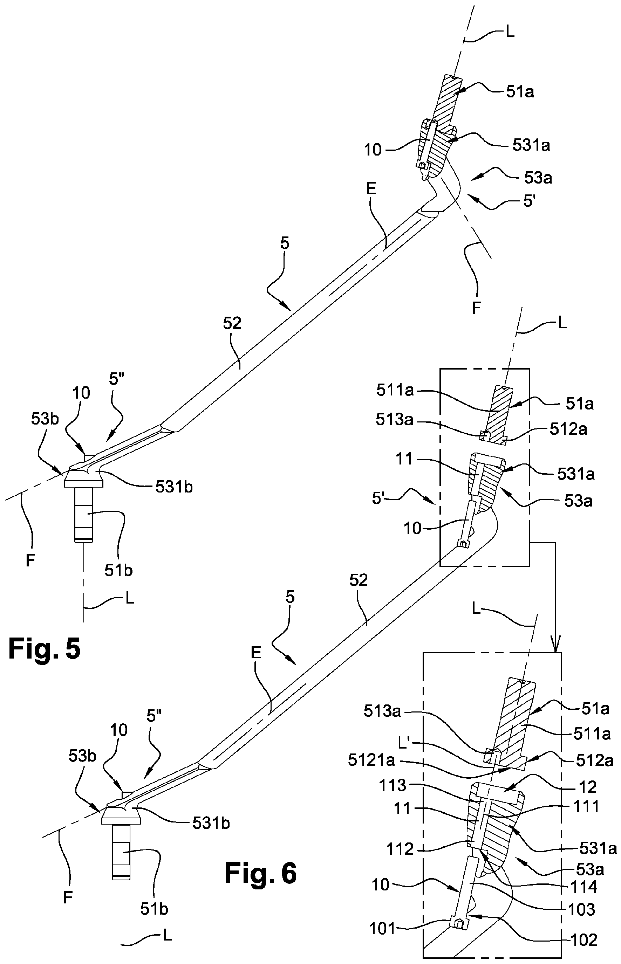

La fixation amovible de l'arbre de roulement 51a sur la tête d'embout 531a d'une extrémité 5' d'un barreau d'effeuillage 5 est détaillée sur les figures 5 et 6 (voir les coupes locales de ces deux figures).

On notera que la fixation amovible de l'autre arbre de roulement 51b sur la tête d'embout 531b de l'autre extrémité du barreau d'effeuillage 5 est réalisée d'une manière identique ou similaire.

Comme on peut le voir sur les figures 5 et 6, la tête d'embout 531a comprend ledit orifice traversant 11, d'axe longitudinal 111, qui comporte une extrémité distale 112, à distance de l'arbre de roulement 51a (côté partie active 52 du barreau 5), et une extrémité proximale 113, à proximité dudit arbre de roulement 51a (et à l'opposé de la partie active de barreau 52).

Cet orifice traversant 11, de forme générale cylindrique, est adapté pour recevoir la vis de fixation 10 constituée d'une tête de vis 101 raccordée par un épaulement 102 à un corps de vis 103 muni d'un filetage ; et ladite extrémité distale 112 de l'orifice traversant 11 comporte un épaulement 114 destiné à coopérer avec l'épaulement 102 de la tête 101 de la vis de fixation 10, pour le blocage en translation de cette dernière (dans le sens de son serrage).

D'autre part, l'arbre de roulement 51a consiste en un organe cylindrique 511a, d'axe longitudinal L, comportant une embase de fixation 512a.

Cette embase de fixation 512a comporte une face d'extrémité 5121a dans laquelle débouche un orifice taraudé 513a, muni d'un filetage, lequel orifice taraudé 513a comporte un axe longitudinal L'.

Cet orifice taraudé 513a, ici borgne, est agencé pour pouvoir venir dans le prolongement de l'orifice traversant 11 de la tête d'embout 531a, pour permettre le positionnement du corps de vis 103 dans ledit orifice traversant 11 et dans ledit orifice taraudé 513a qui le prolonge, afin d'assurer la fixation amovible recherchée dudit arbre de roulement 51a sur ladite extrémité 5' de barreau d'effeuillage 5 par la coopération du filetage de la vis 10 avec le filetage de l'orifice taraudé 513a.

Comme on peut le voir sur la figure 6, l'axe longitudinal L de l'organe cylindrique 511a de l'arbre de roulement 51a, et l'axe longitudinal L' de l'orifice taraudé 513a de son embase de fixation 512a, sont parallèles entre eux et non confondus.

Pour faciliter la mise en oeuvre de cette caractéristique, l'embase de fixation 512a de l'arbre de roulement 51a comporte une section transversale audit axe longitudinal L' de l'orifice taraudé 513a, dont l'encombrement est supérieur à l'encombrement de la section transversale audit axe longitudinal L de l'organe cylindrique 511a.

Le positionnement de la vis de fixation 10 parallèlement mais de manière désaxée par rapport à l'axe longitudinal L de l'organe cylindrique 511a permet de maintenir ladite vis 10 serrée, malgré un mouvement de rotation qui aurait tendance sur l'un des deux moyeux supports à la desserrer si elle était alignée avec ledit axe L.

Pour recevoir l'embase de fixation 512a de l'arbre de roulement 51a, l'extrémité 5' du barreau d'effeuillage 5, et plus particulièrement la tête d'embout 531a, comporte une réservation 12 dont la forme est complémentaire de celle de ladite embase de fixation 512a, et dans laquelle débouche l'extrémité proximale 113 de l'orifice traversant 11.

La section de la réservation 12 peut être prévue non circulaire pour assurer un positionnement correct de l'arbre de roulement 51a lors de l'insertion de son embase de fixation 512a au sein de ladite réservation 12, avec une mise en correspondance automatique de l'axe longitudinal L' de l'orifice taraudé 513a avec l'axe longitudinal 111 de l'orifice traversant 11.

On comprend qu'une fois l'embase de fixation 512a positionnée dans la réservation 12 de la tête d'embout 531a du barreau d'effeuillage 5 (par appui de sa face d'extrémité 5121a dans le fond de ladite réservation 12), la vis de fixation 10 peut être utilisée pour fixer l'arbre de roulement 51a sur la tête d'embout 531a, par l'introduction de son corps cylindrique 103 par l'extrémité distale 112 de l'orifice traversant 11, puis par vissage dudit corps cylindrique 103 dans l'orifice taraudé 513a dudit arbre de roulement 51a, et serrage jusqu'à ce que l'épaulement 102 de la tête de vis 101 vienne en appui contre l'épaulement 114 de ladite tête d'embout 531a.

On comprend également que le démontage de l'arbre de roulement 51a par rapport à la tête d'embout 531a peut s'effectuer par simple desserrage et enlèvement de la vis de fixation 10, ce qui permet le démontage du barreau d'effeuillage 5 sans nécessiter le démontage des moyeux supports associés.

L'action sur la vis de fixation 10 s'effectue côté partie active 52 du barreau d'effeuillage 5, ce qui facilite les opérations de montage et de démontage.

Le démontage des barreaux d'effeuillage 5 est encore facilité du fait de la fixation amovible de leurs deux arbres de roulement 51a et 51b.

Bien entendu, tout autre moyen de fixation amovible des arbres de roulement 51a, 51b sur les extrémités 5', 5" des barreaux d'effeuillage 5 peut être envisagé.

Par exemple, l'embase de fixation de l'arbre de roulement peut comporter une nervure en forme de tenon qui vient se loger dans une réservation de forme complémentaire ouverte sur le côté, ménagée dans la tête d'embout, les deux parties étant assemblées de manière amovible par une vis de fixation.

L'ouverture sur le côté de cette réservation permet alors un montage et un démontage du barreau dans un sens perpendiculaire à l'axe des arbres de roulement, facilitant ainsi ces opérations.

Les réservations ménagées aux deux extrémités du barreau sont avantageusement orientées selon des axes parallèles et s'ouvrent dans la même direction pour permettre un assemblage simultané des deux têtes d'embout avec leurs arbres de roulement respectifs.

## Revendications

1. Dispositif d'effeuillage de légumes à tubercule, type carotte, betterave, navet ou similaire, pour une machine de récolte de tels légumes, lequel dispositif d'effeuillage (4) est du type comprenant deux jeux juxtaposés (4A, 4B) de barreaux d'effeuillage (5) portés par des moyeux support rotatifs (6A1, 6B1, 6A2, 6B2), de manière adaptée pour que lesdits barreaux d'effeuillage (5) desdits deux jeux de barreaux d'effeuillage (4A, 4B) s'entrecroisent et pincent les feuilles desdits légumes pour les désolidariser de leur tubercule par arrachage,
les deux extrémités (5', 5") de chacun desdits barreaux d'effeuillage (5) se prolongeant par un arbre de roulement (51a, 51b), et chaque moyeu support (6A1, 6B1, 6A2, 6B2) comportant une pluralité de systèmes de roulements (7), chacun adapté à la réception de l'un desdits arbres de roulement (51a, 51b),
**caractérisé en ce que** l'un au moins desdits barreaux d'effeuillage (5) comporte au moins une extrémité (5', 5") munie de moyens de fixation amovible (10, 11, 513a) dudit arbre de roulement (51a, 51b).

2. Dispositif d'effeuillage selon la revendication 1, **caractérisé en ce que** lesdits moyens de fixation amovible comprennent une vis de fixation (10).

3. Dispositif d'effeuillage selon la revendication 2, **caractérisé en ce que** l'extrémité (5', 5") dudit barreau d'effeuillage (5) muni desdits moyens de fixation amovible (10, 11, 513a) dudit arbre de roulement (51a) comprend un orifice traversant (11) comportant une extrémité distale (112), à distance dudit arbre de roulement (51a), et une extrémité proximale (113), à proximité dudit arbre de roulement (51a),
lequel orifice traversant (11) est adapté pour recevoir ladite vis de fixation (10) constituée d'une tête de vis (101) raccordée par un épaulement (102) à un corps de vis (103) muni d'un filetage,
ladite extrémité distale (112) dudit orifice traversant (11) comportant un épaulement (114) destiné à coopérer avec ledit épaulement (102) de ladite vis de fixation (10), pour le blocage en translation de cette dernière,
et ledit arbre de roulement (51a) consistant en un organe cylindrique (511a) comportant une embase de fixation (512a), laquelle embase de fixation (512a) comporte un orifice taraudé (513a), muni d'un filetage, agencé pour venir dans le prolongement dudit orifice traversant (11) de l'extrémité (5') dudit barreau d'effeuillage (5), pour permettre le positionnement dudit corps de vis (103) dans ledit orifice traversant (11) et dans ledit orifice taraudé (513a) qui le prolonge, afin d'assurer la fixation amovible dudit arbre de roulement (51a) sur ladite extrémité (5') de barreau d'effeuillage (5) par la coopération dudit filetage de ladite vis de fixation (10) avec ledit filetage dudit orifice taraudé (513a).

4. Dispositif d'effeuillage selon la revendication 3, **caractérisé en ce que** ledit organe cylindrique (511a) dudit arbre de roulement (51a) comporte un axe longitudinal (L),
**en ce que** ledit orifice taraudé (513a) de ladite embase de fixation (512a) comporte un axe longitudinal (L'),
et **en ce que** lesdits axes longitudinaux (L) et (L') sont parallèles entre eux.

5. Dispositif d'effeuillage selon la revendication 4, **caractérisé en ce que** l'embase de fixation (512a) dudit arbre de roulement (51a) comporte une section transversale audit axe longitudinal (L') dudit orifice taraudé (513a), dont l'encombrement est supérieur à l'encombrement de la section transversale audit axe longitudinal (L) dudit organe cylindrique (511a).

6. Dispositif d'effeuillage selon l'une quelconque des revendications 4 ou 5, **caractérisé en ce que** l'axe longitudinal (L) dudit organe cylindrique (511a) et l'axe longitudinal (L') dudit orifice taraudé (513a) ne sont pas confondus.

7. Dispositif d'effeuillage selon l'une quelconque des revendications 3 à 6, **caractérisé en ce que** l'extrémité (5') dudit barreau d'effeuillage (5) comporte une réservation (12) dont la forme est complémentaire de celle d'au moins une partie de ladite embase (512a) dudit arbre de roulement (51a), pour l'accueil de cette dernière.

8. Dispositif d'effeuillage selon l'une quelconque des revendications 3 à 7, **caractérisé en ce que** ledit barreau d'effeuillage (5) comporte une partie active centrale (52), rectiligne, ou sensiblement rectiligne, d'axe longitudinal (E), munie de deux embouts monoblocs (53a, 53b) qui se terminent par une tête d'embout (531a, 531b) constituant lesdites extrémités (5', 5") de barreaux d'effeuillage (5),
lesquels embouts (53a, 53b) s'étendent selon un axe longitudinal (F) incliné par rapport audit axe (E),
ledit orifice traversant (11) étant ménagé au travers de ladite tête d'embout (531a).

9. Dispositif d'effeuillage selon l'une quelconque des revendications 1 à 8, **caractérisé en ce que** les deux extrémités (5', 5") de l'un au moins desdits barreaux d'effeuillage (5) sont munies desdits moyens de fixation amovible (10, 11, 513a) de l'arbre de roulement associé (51a).

10. Dispositif d'effeuillage selon la revendication 9, **caractérisé en ce que** les extrémités (5', 5") de tous les barreaux d'effeuillage (5) des deux jeux de barreaux d'effeuillage (4A, 4B) sont munies desdits moyens de fixation amovible (10, 11, 513a) de l'arbre de roulement associé (51a).

11. Barreau d'effeuillage pour un dispositif d'effeuillage (4) selon l'une quelconque des revendications 1 à 10, dont au moins l'une des extrémités (5', 5") est munie de moyens de fixation amovible (10, 11, 513a) de l'arbre de roulement associé (51a).

## Patentansprüche

1. Vorrichtung zur Blattentfernung von Knollengemüse, wie zum Beispiel Mohrrüben, Zuckerrüben, Rüben und dgl., für eine Erntemaschine dieses Gemüses, wobei die Vorrichtung (4) zur Blattentfernung von einem Typ ist, der zwei nebeneinander angeordnete Sätze (4A, 4B) von Blattentfernungsstangen (5) aufweist, die von drehenden Stütznaben (6A1, 6B1, 6A2, 6B2) getragen werden, die so ausgelegt sind, daß sich die Blattentfernungsstangen (5) der beiden Sätze (4A, 4B) von Blattentfernungsstangen kreuzen und die Blätter des besagten Gemüses einklemmen, um sie durch Abreißen von deren Knolle zu trennen,
wobei die beiden Enden (5', 5") jeder der Blattentfernungsstangen (5) durch eine Lagerwelle (51a, 51b) verlängert werden und jedes Stützlager (6A1, 6B1, 6A2, 6B2) eine Mehrzahl von Lagersystemen (7) aufweist, von denen jedes dazu ausgelegt ist, eine der Lagerwellen (51a, 51b) aufzunehmen,
**dadurch gekennzeichnet, daß** wenigstens eine der Blattentfernungsstangen (5) wenigstens ein mit entfernbaren Mitteln (10, 11, 513a) zum Befestigen der Lagerwelle (51a, 51b) versehenes Ende (5', 5") aufweist.

2. Vorrichtung zur Blattentfernung gemäß Anspruch 1, **dadurch gekennzeichnet, daß** die entfernbaren Befestigungsmittel eine Befestigungsschraube (10) aufweisen.

3. Vorrichtung zur Blattentfernung gemäß Anspruch 2, **dadurch gekennzeichnet, daß** das mit den entfernbaren Befestigungsmitteln (10, 11, 513a) der Lagerwelle (51a) versehene Ende (5', 5") der Blattentfernungsstange (5) ein Durchgangsloch (11) aufweist, das ein von der Lagerwelle (51a) entferntes distales Ende (112) und ein in der Nähe der Lagerwelle (51a) liegendes proximales Ende (113) aufweist, wobei das Durchgangsloch (11) dazu ausgelegt ist, die aus einem Schraubenkopf (101), der durch eine Schulter (102) mit einem ein Gewinde aufweisenden Schraubenkörper (103) verbunden ist, bestehende Befestigungsschraube (10) aufzunehmen,
wobei das distale Ende (112) des Durchgangslochs (11) eine Schulter (114) aufweist, die dazu bestimmt ist, mit der Schulter (102) der Befestigungsschraube (10) zum translatorischen Blockieren der letzteren zusammenzuwirken,
und wobei die Lagerwelle (51a) aus einem zylindrischen Organ (511a) besteht, das einen Befestigungssockel (512a) aufweist, wobei der Befestigungssockel (512a) ein mit einem Gewinde versehenes Gewindeloch (513a) aufweist, das so angeordnet ist, daß es in Verlängerung des Durchgangslochs (11) des Endes (5') der Blattentfernungsstange (5) ist, um ein Positionieren des Schraubenkörpers (103) im Durchgangsloch (11) und in dem dieses verlängernden Gewindeloch (513a) zu ermöglichen, um die entfernbare Befestigung der Lagerwelle (51a) an dem Ende (5') der Blattentfernungsstange (5) durch das Zusammenwirken des Gewindes der Befestigungsschraube (10) mit dem Gewinde des Gewindelochs (513a) sicherzustellen.

4. Vorrichtung zur Blattentfernung gemäß Anspruch 3, **dadurch gekennzeichnet, daß** das zylindrische Organ (511a) der Lagerwelle (51a) eine Längsachse (L) aufweist,
daß das Gewindeloch (513a) des Befestigungssockels (512a) eine Längsachse (L') aufweist,
und daß die Längsachsen (L) und (L') zueinander parallel sind.

5. Vorrichtung zur Blattentfernung gemäß Anspruch 4, **dadurch gekennzeichnet, daß** der Befestigungssockel (512a) der Lagerwelle (51a) einen zur Längsachse (L') des Gewindelochs (513a) querliegenden Querschnitt aufweist, dessen Abmessungen größer als die Abmessungen des zur Längsachse (L) des zylindrischen Organs (511a) querliegenden Querschnitts sind.

6. Vorrichtung zur Blattentfernung gemäß einem der Ansprüche 4 oder 5, **dadurch gekennzeichnet, daß** die Längsachse (L) des zylindrischen Organs (511a) und die Längsachse (L') des Gewindelochs (513a) nicht zusammenfallen.

7. Vorrichtung zur Blattentfernung gemäß einem der Ansprüche 3 bis 6, **dadurch gekennzeichnet, daß** das Ende (5') der Blattentfernungsstange (5) eine Einbuchtung (12) aufweist, deren Form zu jener von wenigstens einem Teil des Sockels (512a) der Lagerwelle (51a) komplementär ist, um diesen aufzunehmen.

8. Vorrichtung zur Blattentfernung gemäß einem der Ansprüche 3 bis 7, **dadurch gekennzeichnet, daß** die Blattentfernungsstange (5) einen zentralen geradlinigen oder im Wesentlichen geradlinigen Teil (52) mit einer Längsachse (E) aufweist, der mit zwei einstückigen Endstücken (53a, 53b) versehen ist, die mit einem Endstückkopf (531a, 531b) enden, der die Enden (5', 5") der Blattentfernungsstange (5) bildet,
wobei sich die Endstücke (53a, 53b) entlang einer gegenüber der besagten Achse (E) schrägen Längsachse (F) erstrecken,
wobei das Durchgangsloch (11) durch den Endstückkopf (531a) führt.

9. Vorrichtung zur Blattentfernung gemäß einem der Ansprüche 1 bis 8, **dadurch gekennzeichnet, daß** die beiden Enden (5', 5") wenigstens einer der Blattentfernungsstangen (5) mit den entfernbaren Befestigungsmitteln (10, 11, 513a) der zugehörigen Lagerwelle (51a) versehen sind.

10. Vorrichtung zur Blattentfernung gemäß Anspruch 9, **dadurch gekennzeichnet, daß** die Enden (5', 5") aller Blattentfernungsstangen (5) der beiden Sätze (4A, 4B) von Blattentfernungsstangen mit den entfernbaren Befestigungsmitteln (10, 11, 513a) der zugehörigen Lagerwelle (51a) versehen sind.

11. Blattentfernungsstange für eine Vorrichtung (4) zur Blattentfernung gemäß einem der Ansprüche 1 bis 10, von der wenigstens eines der Enden (5', 5") mit entfernbaren Befestigungsmitteln (10, 11, 513a) der zugehörigen Lagerwelle (51a) versehen ist.

## Claims

1. Device for removing the leaves from tuberous vegetables, such as carrots, beetroots, turnips or the like, for a machine for harvesting such vegetables, wherein said leaf-removing device (4) is of the type comprising two juxtaposed sets (4A, 4B) of leaf-removing bars (5) carried by rotary support hubs (6A1, 6B1, 6A2, 6B2), in such a manner that said leaf-removing bars (5) of said two leaf-removing bar sets (4A, 4B) cross each other and pinch the leaves of said vegetables to detach them from their tuber by pulling them,
the two ends (5', 5") of each of said leaf-removing bars (5) being extended by a rolling bearing shaft (51a, 51b), and each support hub (6A1, 6B1, 6A2, 6B2) including a plurality of rolling bearing systems (7), each adapted for receiving one of said rolling bearing shafts (51a, 51b),
**characterized in that** one at least of said leaf-removing bars (5) includes at least one end (5', 5") provided with means (10, 11, 513a) for the removable fixation of said rolling bearing shaft (51a, 51b).

2. Leaf-removing device according to claim 1, **characterized in that** said removable fixation means comprise a fixation screw (10).

3. Leaf-removing device according to claim 2, **characterized in that** the end (5', 5") of said leaf-removing bar (5) provided with said means (10, 11, 513a) for the removable fixation of said rolling bearing shaft (51a) comprises a through-orifice (11) including a distal end (112), far from said rolling bearing shaft (51a), and a proximal end (113), near said rolling bearing shaft (51a),
wherein said through-orifice (11) is adapted to receive said fixation screw (10) consisted of a screw head (101) connected by a shoulder (102) to a screw body (103) provided with a thread,
said distal end (112) of said through-orifice (11) including a shoulder (114) intended to cooperate with said shoulder (102) of said fixation screw (10), for the locking in translation of the latter,
and said rolling bearing shaft (51a) consisting in a cylindrical member (511a) including a fixation base (512a), wherein said fixation base (512a) includes a tapped orifice (513a), provided with a thread, arranged to come in the extension of said through-orifice (11) of the end (5') of said leaf-removing bar (5), to allow the positioning of said screw body (103) in said through-orifice (11) and in said tapped orifice (513a) that extends the latter, in order to ensure the removable fixation of said rolling bearing shaft (51a) to said end (5') of the leaf-removing bar (5) by the cooperation of said thread of said fixation screw (10) with said thread of said tapped orifice (513a).

4. Leaf-removing device according to claim 3, **characterized in that** said cylindrical member (511a) of said rolling bearing shaft (51a) includes a longitudinal axis (L),
**in that** said tapped orifice (513a) of said fixation base (512a) includes a longitudinal axis (L'),
and **in that** said longitudinal axes (L) and (L') are parallel to each other.

5. Leaf-removing device according to claim 4, **characterized in that** the fixation base (512a) of said rolling bearing shaft (51a) has a section transverse to said longitudinal axis (L') of said tapped orifice (513a), whose size is greater than that of the section transverse to said longitudinal axis (L) of said cylindrical member (511a).

6. Leaf-removing device according to any one of claims 4 or 5, **characterized in that** the longitudinal axis (L) of said cylindrical member (511a) and the longitudinal axis (L') of said tapped orifice (513a) are not merged with each other.

7. Leaf-removing device according to any one of claims 3 to 6, **characterized in that** the end (5') of said leaf-removing bar (5) includes a recess (12) whose shape is complementary of that of at least one part of said base (512a) of said rolling bearing shaft (51a), for receiving the latter.

8. Leaf-removing device according to any one of claims 3 to 7, **characterized in that** said leaf-removing bar (5) includes a central active part (52), that is rectilinear, or substantially rectilinear, of longitudinal axis (E), provided with two single-piece tips (53a, 53b) that are ended by a tip head (531a, 531b) constituting said ends (5', 5") of the leaf-removing bars (5),
wherein said tips (53a, 53b) extend along a longitudinal axis (F) inclined with respect to said axis (E),
said through-orifice (11) being formed through said tip head (531a).

9. Leaf-removing device according to any one of claims 1 to 8, **characterized in that** the two ends (5', 5") of at least one of said leaf-removing bars (5) are provided with said means (10, 11, 513a) for the removable fixation of the associated rolling bearing shaft (51a).

10. Leaf-removing device according to claim 9, **characterized in that** the ends (5', 5") of all the leaf-removing bars (5) of the two leaf-removing bar sets (4A, 4B) are provided with said means (10, 11, 513a) for the removable fixation of the associated rolling bearing shaft (51a).

11. Leaf-removing bar for a leaf-removing device (4) according to any one of claims 1 to 10, at least one of the ends (5", 5") of which is provided with means (10, 11, 513a) for the removable fixation of the associated rolling bearing shaft (51a).
